# EUROPEAN PATENT SPECIFICATION

(11) **EP 1 686 459 B1**
(45) Date of publication and mention of the grant of the patent: **02.07.2008**
(21) Application number: 05001918.1
(22) Date of filing: 31.01.2005
(51) Int. Cl.: G06F 9/318, G06F 12/14

(54) **Method and system for controlling access in memory devices, computer program product therefor**
Verfahren, System und Computerprogrammprodukt zur Steuerung des Zugriffs auf Speicheranordnungen
Méthode, système et produit programme pour contrôler l'accès à des dispositifs de mémoire.

(43) Date of publication of application: 02.08.2006
(73) Proprietor: STMicroelectronics S.r.l., 20041 Agrate Brianza (Milano) (IT)
(72) Inventor: Grossier, Nicolas Bernard, 20059 Oreno di Vimercate Milano (IT)
(74) Representative: Bosotti, Luciano

(56) References cited:
- US-A- 6 160 734
- US-A1- 2002 112 131

## Description

### Field of the invention

The invention relates to techniques for controlling access in memory devices.

The invention was developed by paying specific attention to the possible application in processors, such as ARM7TDMI processors, and similar microprocessors with regular pipeline.

### Description of the related art

The data and the code stored in the memory area of a microprocessor may contain significant and/or proprietary information related to the know-how of the user (customer). Additionally, modifications in the code/data stored in a microprocessor may reduce the reliability of the whole system and/or introduce mismatch with the initial functionality of the microprocessor.

As a consequence of this, the code and the data stored in a microprocessor need protection against intrusion and undesired alteration. Several applications may thus require that access to critical data or code stored in the memory area of a microprocessor is properly controlled.

A typical way of implementing controlled access to critical memory area is to use a Memory Management Unit (MMU) with the ensuing possibility of marking certain areas in order to prevent unwanted access to those areas. This approach to controlled access implementation requires, in general, a significant amount of hardware.

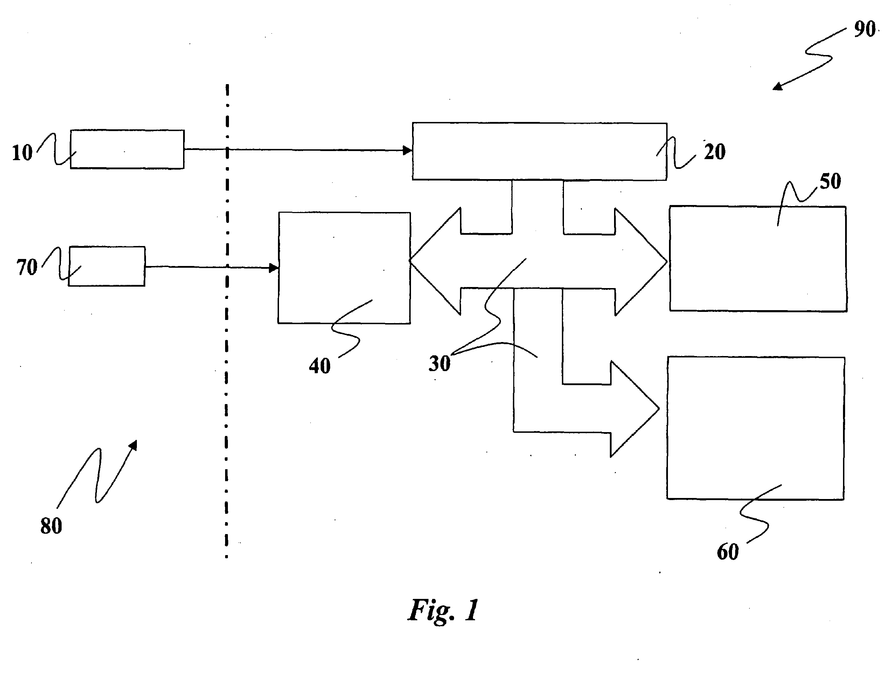

Figure 1 shows an examplary system overview wherein a debugger block 10 directly communicates with a microprocessor 20. The microprocessor 20 can be, e.g., a processor of the ST30 family. The microprocessor 20 is connected, via a system bus 30, to a working memory 40, to a trusted code memory 50 and to a sensitive data/code memory 60. Specifically, the working memory 40 can be a Random Access Memory (RAM) device, and the two memory areas 50 and 60 can be portions of a flash memory device. The working memory 40 directly communicates with a monitor/boot block 70. The debugger block 10 and the monitor/boot block 70 are element of an "external" world 80 in respect of as regards to an "internal" world 90 containing the microprocessor 20.

Starting from the arrangement of Figure 1, a dedicated design without external access can be achieved, for instance, by disabling communication between the external world 80 and the internal world 90.

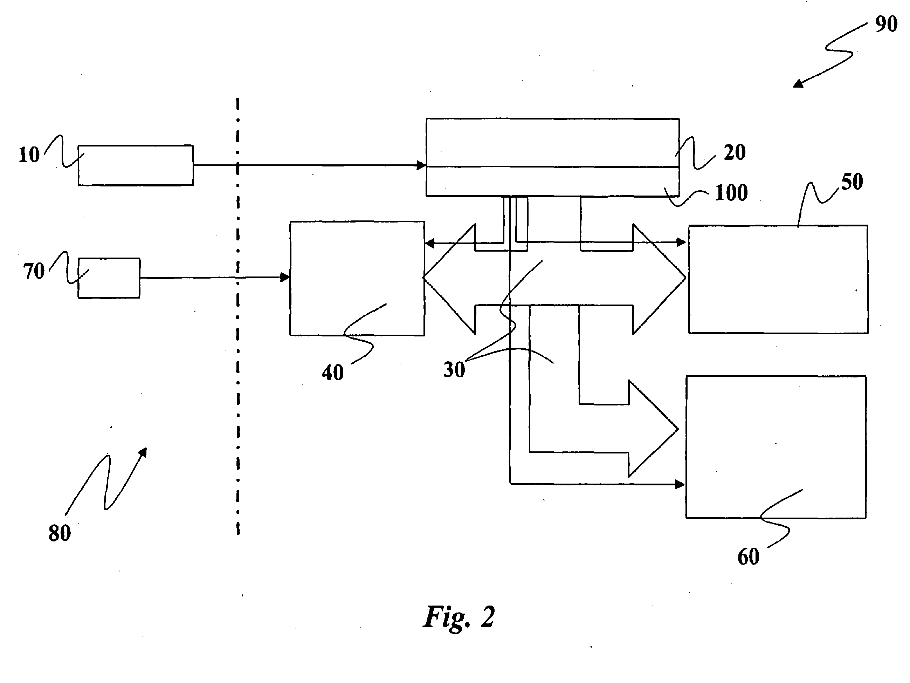

Figure 2 shows an example of controlled access that employs a Memory Management Unit (MMU). In Figure 2 the blocks that are identical or equivalent to those already described with reference to Figure 1 are designated with the same reference numbers. In the arrangement of Figure 2 a Memory Management Unit 100 is added to the microprocessor 20 with the aim of maintaining communications among the microprocessor 20 and the memory blocks 40, 50 and 60. Specifically, the Memory Management Unit 100 provides a privileged mode. This solution is expensive in term of area consumption.

The possibility also exists of "mixing" the solutions discussed in the foregoing, by disabling the communication between the external world 80 and the internal world 90 while also including the Memory Management Unit 100 in the resulting arrangement.

More specifically, the invention relates to a method and a system according to the preambles of Claims 1 and 4, which are known e.g. from US-A-6 160 734.

### Object and summary of the invention

While such prior art arrangements are per se capable of providing satisfactory results, the need is felt for an improved solution adapted to ensure a minimum amount of additional hardware for controlling access in memory devices.

The object of the invention is thus to provide such an improved solution.

According to the present invention, that object is achieved by means of a method having the features set forth in claim 1 that follows. The invention also relates to a corresponding system as called for in claim 4 as well as a related computer program product as called for in claim 7, loadable in the memory of at least one computer and including software code portions for performing the steps of the method of the invention when the product is run on a computer. As used herein, reference to such a computer program product is intended to be equivalent to reference to a computer-readable medium containing instructions for controlling a computer system to coordinate the performance of the method of the invention. Reference to "at least one computer" is evidently intended to highlight the possibility for the present invention to be implemented in a distributed/ modular fashion.

The claims are an integral part of the disclosure of the invention provided herein.

### Brief description of the annexed drawings

The invention will now be described, by way of example only, with reference to the enclosed figures of drawing, wherein:
- Figures 1 and 2, related to the prior art, have already been described in the foregoing;
- Figure 3 shows an example of controlled access according to the solution described herein;
- Figure 4 shows an example of protection architecture according to the solution described herein;
- Figure 5 shows an example of timing diagram according to the solution described herein; and
- Figure 6 shows an example of additional protection hardware according to the solution described herein.

### Detailed description of preferred embodiments of the invention

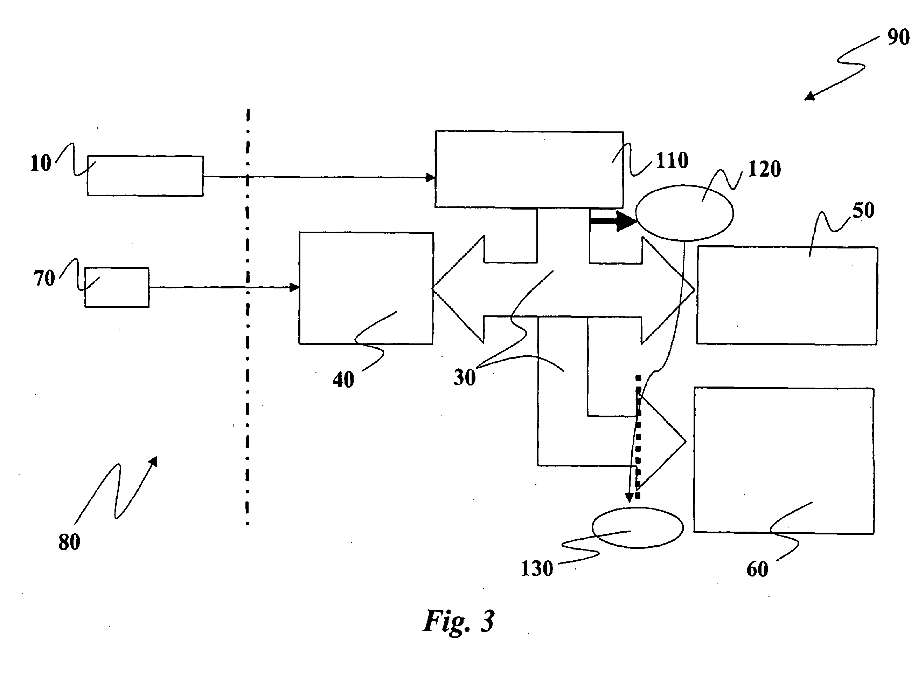

An example of controlled access according to the solution described herein is shown in Figure 3, wherein blocks identical or equivalent to those already described in connection with Figures 1 and 2 are designated with the same reference numbers.

Specifically, in Figure 3 the microprocessor 20 is an ARM7 microprocessor designated 110, and a pipeline emulation block 120 is added in order to perform a control data access function 130.

The solution described herein is adapted to be implemented e.g. in the ST30 product family which is based on the RISC (Reduced Instruction Set Computer) processor ARM7TDMI.

The arrangement described herein can be easily configured in order to mark all the instructions with a field describing the origin of the code being executed, thus enabling data access only from authorized code. This solution requires only a minimum amount of additional logic as described in the following.

A specific protection arrangement can be implemented through a model of the ARM7TDMI pipeline, wherein the possibility exists of predicting what instruction is currently in the EXECUTE phase of the pipeline.

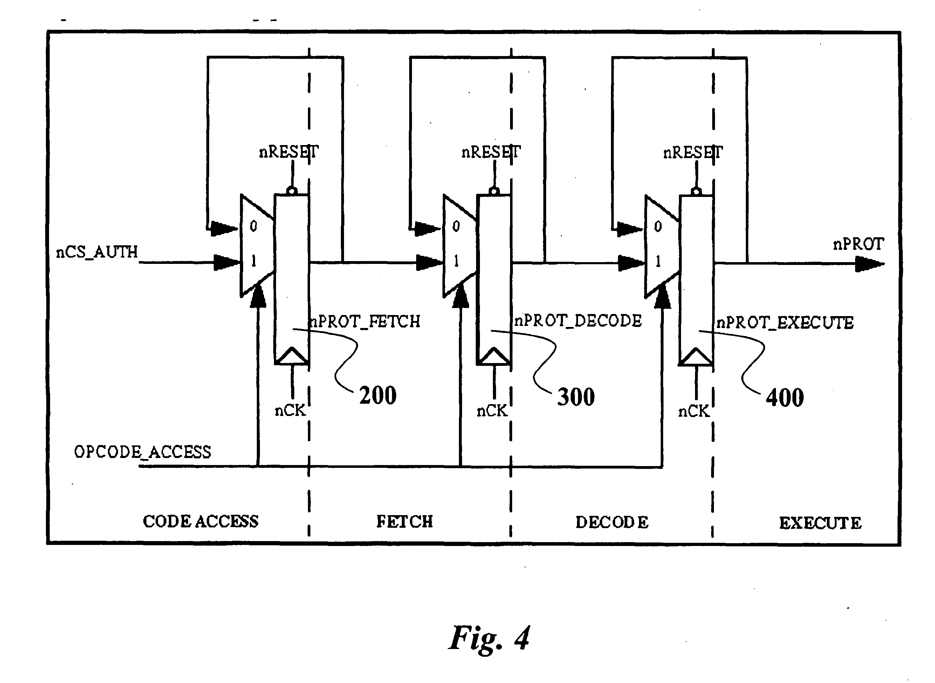

By resorting to that arrangement a bit is associated to all the instructions currently in the pipeline (at FETCH, DECODE and EXECUTE phase) in the form of a bit configured to mark if the instruction in question has been executed from an authorized memory area or not. The additional bit is saved at a dedicated location such as a dedicated flip-flop, and there is one flip-flop for each pipeline phase (see e.g. the flip-flops 200, 300, and 400 shown in Figure 4).

This arrangement uses and emulates the ARM7TDMI core. In particular, the following ARM7TDMI signals, synchronous with the ARM7TDMI core clock, are used:
- nMRQ is the memory request signal: 0 = memory request, 1 = idle;
- nOPC is the memory access type signal: 0 = opcode, 1 = data;
- nWAIT is a temporization signal for the management of memories with several wait state.

When a memory cannot provide a data within the end of the cycle, it asserts the signal nWAIT low in order to stall the processor, until the data is available at the memory output.

The additional bit is shifted from one flip-flop to the next one each time a valid OPCODE fetch is performed by the ARM7TDMI processor (nMRQ=0, nOPC=0 and nWAIT=1 at clock falling edge).

Figure 4 shows a possible way of generating an nPROT signal for controlling the access to a protected memory area such as the area 60. An OPCODE ACCESS signal is set to the high value when a valid OPCODE operation is done by the microprocessor (nMRQ=0, nOPC=0 and nWAIT=1 at clock falling edge in the case of ARM7TDMI).

Every time the OPCODE_ACCESS is high, a new instruction is processed by the microprocessor ARM7TDMI, and the previous instruction is pushed ahead in the pipeline. In the same way, the three flip-flops nPROT_FETCH, nPROT_DECODE, and nPROT_EXECUTE are updated, pushing ahead the nPROT information associated to the pipeline instruction.

Specifically:
- nPROT_FETCH is updated with the type of access '0' when an authorized memory is accessed, with the type of access '1' otherwise;
- nPROT_DECODE is updated with the nPROT_FETCH value,
- nPROT_EXECUTE (which is an alias for final nPROT signal) is updated with the nPROT_DECODE value.

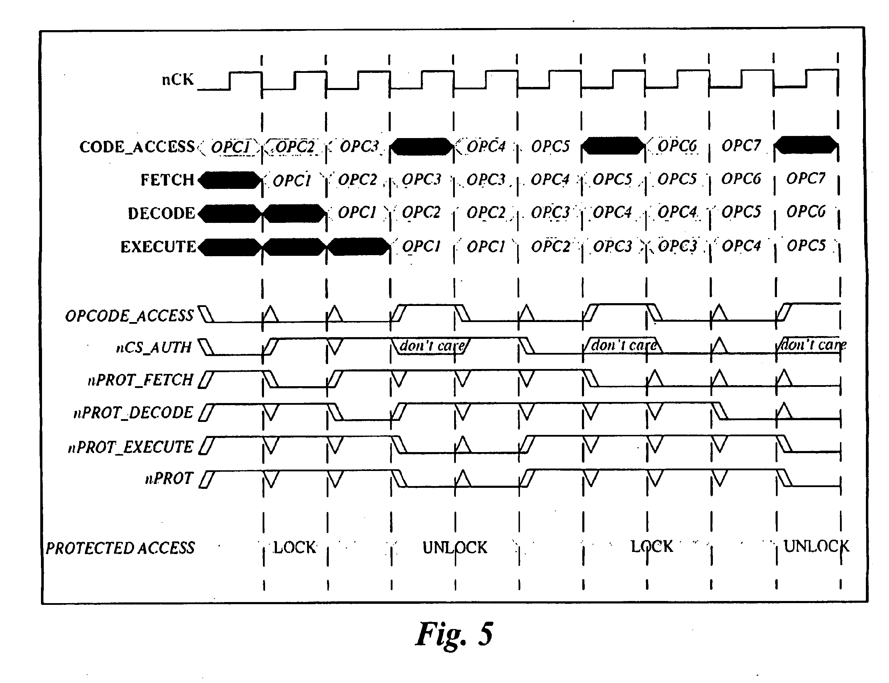

Figure 5 reports some timing diagram showing the status of the protected access depending on the source where the instruction has been fetched.

The first line represents the clock signal.

The first group of signals represent the status of the ARM pipeline:
- a first type of instruction is an instruction fetched from a memory address which allow protected peripheral accesses,
- a second type of instruction is an instruction fetched from a memory address which does not allow protected peripherals accesses, and
- a polygon refer to a non-instruction.

The second group of signals represent the status of the nPROT information propagation.

The PROTECTED ACCESS signal reports the status of the peripherals that should be protected:
- LOCK means that the peripheral/memory cannot be accessed,
- UNLOCK means that the peripheral/memory can be accessed.

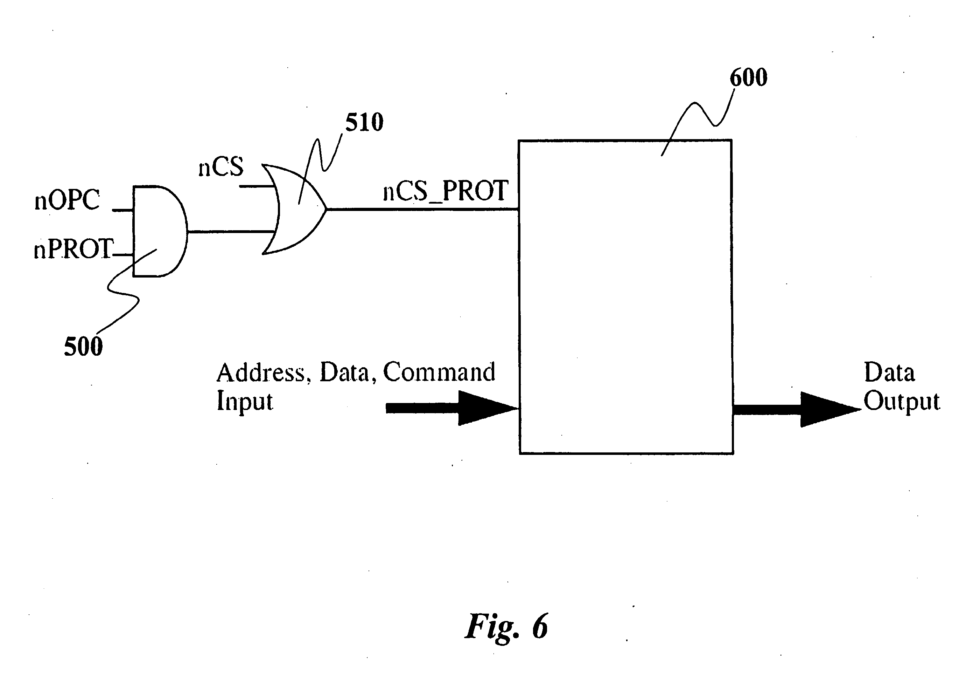

Figure 6 shows the generation of the selection of the protected area. All signals are active at the low state.

The protected area can be accessed only in the following cases:
- processor requests access to fetch code from protected area, and
- processor requests access to read/write data from protected area and nPROT is at the low state (code has been fetched from authorized memory)

In case the processor requests access to read/write data from the protected area with nPROT equal to the value 1, the protected area will not be selected. Further action can be taken like returning a dummy data or generating a FAULT (or nABORT in case of ARM7TDMI) signal to the processor.

The additional hardware employed is represented by an AND logic port 500 with receives as input two signals: nOPC and nPROT. The output of the AND port 500 is fed to an OR logic port 510 together with a signal nCS. The output of the OR port 510 is represented by a signal nCS_PROT that enables the operations in a protected address area 600.

Without prejudice to the underlying principles of the invention, the details and the embodiments may vary, also appreciably, with reference to what has been described by way of example only, without departing from the scope of the invention as defined by the annexed claims

## Claims

1. A method of providing controlled access to a memory area (60) storing code and data, including the steps of:
- providing a processor (110) cooperating with said memory area (60),
- enabling data access in said memory area (60) only from authorized code
**characterized in that** it includes the steps of providing said processor (110) as a pipeline processor including a pipeline emulation block (120) having a plurality of flip-flops (200, 300, 400), wherein said pipeline emulation block (120) comprises one flip-flop for each phase (e.g. FETCH, DECODE, EXECUTE) in said pipeline (120), and implementing said controlled access to said memory area (60) via said pipeline emulation block (120) by:
- marking the instructions processed by said processor (110) with a field describing the origin of the code being executed, via the step of associating to the instructions currently in said pipeline (120) a bit marking if the instruction in question has been fetched from an authorized memory area or not, wherein said bit is saved as an additional bit at a respective dedicated location (200, 300, 400) in a dedicated one of said plurality of flip-flops (200, 300, 400),
- shifting said additional bit from one to a next one of said plurality of flip-flops (200, 300, 400) each time a valid fetch is performed by said processor (110), and
- enabling access to said memory area (60) if said processor (110) requests access to fetch code, or if said processor (110) requests access to read/write data from protected area and said shifted additional bit indicates that said instruction in question has been fetched from an authorized memory area.

2. The method of claim 1, **characterized in that** it includes the step of providing said processor (110) as a RISC (Reduced Instruction Set Computer) processor, such as an ARM processor.

3. The method of claim 1, **characterized in that** it includes the steps of:
- every time a new instruction is processed by said processor (110), pushing the previous instruction ahead in said pipeline (120), and
- updating said plurality of flip-flops (200, 300, 400) by pushing ahead therethrough the information associated to the pipeline instructions.

4. A system for providing controlled access to a memory area (60) storing code and data, including a processor (110) cooperating with said memory area (60), said processor configured for enabling data access in said memory area (60) only from authorized code, the system being **characterized in that** said processor (110) is a pipeline processor including a pipeline emulation block (120) having a plurality of flip-flops (200, 300, 400), wherein said pipeline emulation block (120) comprises one flip-flop for each phase (e.g. FETCH, DECODE, EXECUTE) in said pipeline (120), and said controlled access to said memory area (60) is implemented via said pipeline emulation block by marking the instructions processed by said processor (110) with a field describing the origin of the code being executed, wherein:
- said processor (110) is configured for associating to the instructions currently in said pipeline (120) a bit marking if the instruction in question has been fetched from an authorized memory area or not,
- said pipeline emulation block (120) includes a set of respective dedicated locations (200, 300, 400) for saving said bit as an additional bit, whereby said plurality of flip-flops (200, 300, 400) comprises said respective dedicated locations for saving said bit as an additional bit, said plurality of flip-flops (200, 300, 400) being configured for shifting said additional bit from one to a .next one of said plurality of flip-flops (200, 300, 400) each time a valid fetch is performed by said processor (110), and
- access to said memory area (60) is enabled if said processor (110) requests access to fetch code, or if said processor (110) requests access to read/write data from protected area and said shifted additional bit indicates that said instruction in question has been fetched from an authorized memory area.

5. The system of claim 4, **characterized in that** said processor (110) is a RISC (Reduced Instruction Set Computer) processor, such as an ARM processor.

6. The system of claim 4, **characterized in that** it includes said processor (110) configured for:
- every time a new instruction is processed by said processor (110), pushing the previous instruction ahead in said pipeline (120), and
- updating said plurality of flip-flops (200, 300, 400) by pushing ahead therethrough the information associated to the pipeline instructions.

7. A computer program product loadable in the memory of at least one computer and including software code portions for performing the steps of the method of any of claims 1 to 3.

## Patentansprüche

1. Verfahren zum Schaffen von gesteuertem Zugriff auf einen Speicherbereich (60), der Code und Daten speichert, aufweisend folgende Schritte:
- Bereitstellen eines Prozessors (110), der mit dem Speicherbereich (60) zusammenarbeitet,
- Freigeben von Datenzugriff in dem Speicherbereich (60) nur von einem autorisierten Code,
**dadurch gekennzeichnet, dass** es die Schritte des Bereitstellens des Prozessors (110) als einen Pipeline-Prozessor, der einen Pipeline-Emulationsblock (120) mit einer Mehrzahl von Flip-Flops (200, 300, 400) aufweist, wobei der Pipeline-Emulationsblock (120) ein Flip-Flop für jede Phase (z.B. FETCH, DECODE, EXECUTE) in der Pipeline (120) aufweist, und des Durchführens des gesteuerten Zugriffs auf den Speicherbereich (60) über den Pipeline-Emulationsblock (120) aufweist durch:
- Markieren der von dem Prozessor (110) verarbeiteten Anweisungen mit einem Feld, das den Ursprung des ausgeführten Codes beschreibt, mittels des Schritts des Zuordnens der sich gegenwärtig in der Pipeline (120) befindenden Anweisungen zu einem Bit, das markiert, ob die betreffende Anweisung aus einem autorisierten Speicherbereich abgerufen wurde oder nicht, wobei das Bit als ein zusätzliches Bit an einer entsprechenden zugeordneten Stelle (200, 300, 400) in einem zugeordneten der Mehrzahl von Flip-Flops (200, 300, 400) gespeichert wird,
- Verschieben des zusätzlichen Bits von einem zu einem nächsten der Mehrzahl von Flip-Flops (200, 300, 400) jedes Mal, wenn ein gültiger Abruf von dem Prozessor (110) ausgeführt wird, und
- Freigeben von Zugriff auf den Speicherbereich (60), wenn der Prozessor (110) Zugriff auf den Abruf-Code anfordert oder wenn der Prozessor (110) Zugriff auf Lese/Schreibdaten aus einem geschützten Bereich anfordert und das verschobene zusätzliche Bit anzeigt, dass die betreffende Anweisung aus einem autorisierten Speicherbereich abgerufen wurde.

2. Verfahren nach Anspruch 1, **dadurch gekennzeichnet, dass** es den Schritt des Bereitstellens des Prozessors (110) als einen RISC(von englisch ,Reduced Instruction Set Computer'; Computer mit reduziertem Befehlssatz)-Prozessor, wie z.B. einen ARM-Prozessor, aufweist.

3. Verfahren nach Anspruch 1, **dadurch gekennzeichnet, dass** es folgende Schritte aufweist:
- Weiterschieben der vorhergehenden Anweisung in der Pipeline (120) jedes Mal, wenn eine neue Anweisung von dem Prozessor (110) verarbeitet wird, und
- Aktualisierung der Mehrzahl von Flip-Flops (200, 300, 400) durch das Weiterschieben der den Pipeline-Anweisungen zugeordneten Information durch diese.

4. System zum Schaffen von gesteuertem Zugriff auf einen Speicherbereich (60), der Code und Daten speichert, aufweisend einen Prozessor (110), der mit dem Speicherbereich (60) zusammenarbeitet, wobei der Prozessor dafür konfiguriert ist, Datenzugriff in dem Speicherbereich (60) nur von einem autorisiertem Code freizugeben, wobei das System **dadurch gekennzeichnet ist, dass** der Prozessor (110) ein Pipeline-Prozessor ist, der einen Pipeline-Emulationsblock (120) mit einer Mehrzahl von Flip-Flops (200, 300, 400) aufweist, wobei der Pipeline-Emulationsblock (120) ein Flip-Flop für jede Phase (z.B. FETCH, DECODE, EXECUTE) in der Pipeline (120) aufweist und der gesteuerte Zugriff auf den Speicherbereich (60) mittels des Pipeline-Emulationsblocks durch das Markieren der von dem Prozessor (110) verarbeiteten Anweisungen mit einem Feld, das den Ursprung des ausgeführten Codes beschreibt, durchgeführt wird, wobei:
- der Prozessor (110) dafür konfiguriert ist, die sich gegenwärtig in der Pipeline (120) befindenden Anweisungen einem Bit zuzuordnen, das markiert, ob die betreffende Anweisung aus einem autorisierten Speicherbereich abgerufen wurde oder nicht,
- der Pipeline-Emulationsblock (120) einen Satz von entsprechenden zugeordneten Stellen (200, 300, 400) zum Speichern des Bits als ein zusätzliches Bit aufweist, wobei die Mehrzahl von Flip-Flops (200, 300, 400) die entsprechenden zugeordneten Stellen zum Speichern des Bits als ein zusätzliches Bit aufweist, wobei die Mehrzahl von Flip-Flops (200, 300, 400) dafür konfiguriert ist, das zusätzliche Bit jedes Mal, wenn von dem Prozessor (110) ein gültiger Abruf ausgeführt wird, von einem zu einem nächsten der Mehrzahl von Flip-Flops (200, 300, 400) zu verschieben, und
- Zugriff auf den Speicherbereich (60) freigegeben wird, wenn der Prozessor (110) Zugriff auf den Abruf-Code anfordert oder wenn der Prozessor (110) Zugriff auf Lese/Schreibdaten aus einem geschützten Bereich anfordert und das verschobene zusätzliche Bit anzeigt, dass die betreffende Anweisung aus einem autorisierten Speicherbereich abgerufen wurde.

5. System nach Anspruch 4, **dadurch gekennzeichnet, dass** der Prozessor (110) ein RISC(,Reduced Instruction Set Computer')-Prozessor, wie z.B. ein ARM-Prozessor, ist.

6. System nach Anspruch 4, **dadurch gekennzeichnet, dass** es den Prozessor (110) aufweist, der konfiguriert ist zum:
- Weiterschieben der vorhergehenden Anweisung in der Pipeline (120) jedes Mal, wenn eine neue Anweisung von dem Prozessor (110) verarbeitet wird, und
- Aktualisierung der Mehrzahl von Flip-Flops (200, 300, 400) durch das Weiterschieben der den Pipeline-Anweisungen zugeordneten Information durch diese.

7. Computerprogrammprodukt, das in den Speicher mindestens eines Computers ladbar ist und Softwarecodeteile zum Ausführen der Schritte des Verfahren nach einem der Ansprüche 1 bis 3 aufweist.

## Revendications

1. Procédé de fourniture d'un accès contrôlé à une zone de mémoire (60) stockant un code et des données, comprenant les étapes de :
- fourniture d'un processeur (110) coopérant avec ladite zone de mémoire (60),
- validation de l'accès de données dans ladite zone de mémoire (60) seulement à partir d'un code autorisé
**caractérisé en ce qu'**il comprend les étapes de fourniture dudit processeur (110) en tant que processeur pipeline comprenant un bloc d'émulation pipeline (120) ayant une pluralité de bascules (200, 300, 400), dans lequel ledit bloc d'émulation pipeline (120) comprend une bascule pour chaque phase (par exemple FETCH, DECODE, EXECUTE) dans ledit pipeline (120), et implémentation dudit accès contrôlé à ladite zone de mémoire (60) via ledit bloc d'émulation pipeline (120) par :
- le marquage des instructions traitées par ledit processeur (110) par un champ décrivant l'origine du code exécuté, via l'étape d'association aux instructions actuellement dans ledit pipeline (120) d'un bit marquant si l'instruction en question a été cherché à partir d'une zone de mémoire autorisée ou non, dans lequel ledit bit est sauvegardé comme un bit supplémentaire à un emplacement dédié respectif (200, 300, 400) dans une bascule dédiée de ladite pluralité de bascules (200, 300,400),
- le décalage dudit bit additionnel à partir d'une à une suivante de ladite pluralité des bascules (200, 300, 400) chaque fois qu'une recherche valide est réalisée par ledit processeur (110), et
- la validation de l'accès à ladite zone de mémoire (60) si ledit processeur (110) demande l'accès au code de recherche, ou si ledit processeur (110) demande l'accès pour lire/écrire des données à partir de la zone protégée et ledit bit supplémentaire décalé indique que ladite instruction en question a été cherchée à partir d'une zone de mémoire autorisée.

2. Procédé selon la revendication 1, **caractérisé en ce qu'**il comprend l'étape de fourniture dudit processeur (110) comme un processeur RISC (Reduced Instruction Set Computer) tel qu'un processeur ARM.

3. Procédé selon la revendication 1, **caractérisé en ce qu'**il comprend les étapes de :
- chaque fois qu'une nouvelle instruction est traitée par ledit processeur (110), propulsion de l'instruction précédente vers l'avant dans ledit pipeline (120), et
- mise à jour de ladite pluralité de bascules (200, 300, 400) en propulsant vers l'avant à travers les informations associées aux instructions de pipeline.

4. Système pour fournir un accès contrôlé à une zone de mémoire (60) stockant un code et des données, y compris un processeur (110) coopérant avec ladite zone de mémoire (60), ledit processeur configuré pour valider l'accès de données dans ladite zone de mémoire (60) seulement à partir du code autorisé, le système étant **caractérisé en ce que** ledit processeur (110) est un processeur pipeline comprenant un bloc d'émulation pipeline (120) ayant une pluralité de bascules (200, 300, 400), dans lequel ledit bloc d'émulation pipeline (120) comprend une bascule pour chaque phase (par exemple FETCH, DECODE, EXECUTE) dans ledit pipeline (120), et ledit accès contrôlé à ladite zone de mémoire (60) est implémenté via ledit bloc d'émulation pipeline en marquant les instructions traitées par ledit processeur (110) avec un champ décrivant l'origine du code exécuté, dans lequel :
- ledit processeur (110) est configuré pour associer aux instructions actuellement dans ledit pipeline (120) un bit marquant si l'instruction en question a été cherchée à partir d'une zone de mémoire autorisée ou non,
- ledit bloc d'émulation pipeline (120) comprend un ensemble d'emplacements dédiés respectifs (200, 300, 400) pour sauvegarder ledit bit comme un bit supplémentaire, de sorte que ladite pluralité de bascules (200, 300, 400) comprend lesdits emplacements dédiés respectifs pour sauvegarder ledit bit comme un bit supplémentaire, ladite pluralité de bascules (200, 300, 400) étant configurés pour décaler ledit bit supplémentaire à partir d'une à une suivante de ladite pluralité de bascules (200, 300, 400) chaque fois qu'une recherche valide est réalisée par ledit processeur (110), et
- l'accès à ladite zone de mémoire (60) est validé si ledit processeur (110) demande l'accès à un code de recherche, ou si ledit processeur (110) demande l'accès pour lire/écrire des données à partir de la zone protégée et ledit bit supplémentaire décalé indique que ladite instruction en question a été cherchée à partir d'une zone de mémoire autorisée.

5. Système selon la revendication 4, **caractérisé en ce que** ledit processeur (110) est un processeur RISC (Reduced Instruction Set Computer), tel qu'un processeur ARM.

6. Système selon la revendication 4, **caractérisé en ce qu'**il comprend ledit processeur (110) configuré pour :
- chaque fois qu'une nouvelle instruction est traitée par ledit processeur (110), propulser l'instruction précédente vers l'avant dans ledit pipeline (120), et
- mettre à jour ladite pluralité de bascules (200, 300, 400) en propulsant vers l'avant à travers les informations associées aux instructions pipeline.

7. Produit de programme informatique chargeable dans la mémoire d'au moins un ordinateur et comprenant des parties de code logicielles pour réaliser les étapes du procédé d'une quelconque des revendications 1 à 3.
